# EUROPEAN PATENT SPECIFICATION

(11) **EP 0 528 494 B1**
(45) Date of publication and mention of the grant of the patent: **24.05.1995**
(21) Application number: 92202491.4
(22) Date of filing: 12.08.1992
(51) Int. Cl.: B01J 29/08, C10G 45/54

(54) **Catalyst compositions comprising a modified zeolite of the Y-type**
Katalytische Zusammensetzung bestehend aus einem modifizierten Y-Zeolit Typ
Composition catalytique constituée par une zéolithe modifiée de type Y

(30) Priority: 16.08.1991 EP 91202105
(43) Date of publication of application: 24.02.1993
(73) Proprietor: SHELL INTERNATIONALE RESEARCH MAATSCHAPPIJ B.V., 2596 HR Den Haag (NL)
(72) Inventor: Klazinga, Aan Hendrik, NL-1031 CM Amsterdam (NL); Van Vegchel, Ingrid Maria, NL-1031 CM Amsterdam (NL)

(56) References cited:
- EP-A- 0 366 207
- EP-A- 0 413 138
- US-A- 4 839 320
- US-A- 4 925 546

## Description

The present invention relates to catalyst compositions comprising a modified zeolite of the Y-type. The present invention also relates to a process for the preparation of the modified zeolite of the Y-type. The catalyst compositions in accordance with the present invention can suitably be used in various hydroconversion processes, in particular in hydrocracking processes.

Of the many hydroconversion processes known in the art, hydrocracking is becoming increasingly important since it offers product flexibility together with product quality. As it is also possible to subject rather heavy feedstocks to hydrocracking it will be clear that much attention has been devoted to the development of hydrocracking catalysts.

Modern hydrocracking catalysts are generally based on zeolitic materials. One of the zeolites which is considered to be a good starting material for the manufacture of hydroconversion catalysts is the well-known synthetic zeolite Y as described in US-A-3,130,007. A number of modifications has been reported for this material which include, inter alia, ultra-stable Y (US-A-3,536,605) and ultra-hydrophobic Y (GB-A-2,014,970). In general, it can be said that modifications cause a change in the unit cell size of the zeolite depending on the treatment carried out.

Hydrocracking catalysts comprising a zeolitic component having a reduced unit cell size are favoured, since they have a high selectivity towards middle distillates and in addition a high stability.

It is appreciated by the person skilled in the art that alkaline treatments cause an increase in the unit cell size whereas acidic treatments cause a reduction in the unit cell size.

Moreover, it is well known that the unit cell size and the hydrophilic nature of a zeolite are correlated with each other in the sense that either both increase or decrease depending of course on the type of treatment.

The hydrophilic nature of the zeolites can be measured by the water adsorption capacity or via the determination of the affinity of the zeolites for 1-butanol. In the latter procedure, the so-called Residual Butanol Test, the zeolite is firstly dried by heating in air at a temperature of 300 °C for 16 hours. After drying the zeolite is slurried with a water/1-butanol mixture for 16 hours while the temperature is maintained at 25 °C. The slurry comprises 100 parts by weight of water, 1.0 part by weight of 1-butanol and 10 parts by weight of the zeolite. Subsequently, the amount of 1-butanol left in the aqueous solution is measured by Gas Liquid Chromatography. The amount of 1-butanol (%wt) measured in this way corresponds to the Residual Butanol Test value (RBT). Zeolites with a strong hydrophilic nature have a low affinity for 1-butanol and as a consequence a high RBT value, whereas zeolites with a low hydrophilic nature will have a low RBT value.

Surprisingly, it has now been found that the above-indicated correlation between the hydrophilicity and the unit cell size is uncoupled, when a zeolite of the Y-type is subjected to a specific alkaline treatment.

In this way a zeolite of the Y-type can be obtained having a high hydrophilicity and a low unit cell size.

It has further been found that such a modified zeolite of the Y-type can attractively be applied as a component of a hydrocracking catalyst.

Accordingly, the present invention relates to catalyst composition comprising a modified zeolite of the Y-type and a binder, which modified zeolite is obtainable by subjecting an ultra-stable zeolite Y or a very ultra-stable zeolite Y to a treatment with a solution of an alkaline compound having a pH between 8 and 13.

Preferably, the catalyst composition according to the present invention comprises a modified zeolite of the Y-type which has been prepared by subjecting the ultra-stable zeolite Y or the very ultra-stable zeolite Y to a treatment with a solution of an alkaline compound having a pH between 9 and 12.

Suitably, the alkaline compound comprises metal hydroxides, nitrogen-containing alkaline compounds and organic alkaline compounds.

The nitrogen-containing alkaline compounds include for instance ammonium hydroxide, monoethanolamine, tetrapropylammonium hydroxide and triethanolamine. Preferred nitrogen-containing alkaline compounds comprise ammonium hydroxide and alkanolamines, such amino-compounds having from 1 to 3 alkanol moieties each moiety having from 1 to 6 carbon atoms. More preferred are ethanolamines, such as mono-, di- or triethanolamine, in particular monoethanolamine. The metal hydroxide comprises for instance sodium hydroxide and potassium hydroxide. The organic alkaline compound comprises for instance Na-phenolate. Preferably, use is made of an aqueous solution of the alkaline compound.

Preferably, the modified zeolite of the Y-type has a reduced unit cell size and an increased hydrophilicity.

The preparation of the modified zeolite of the Y- type which is to be used as component of the catalyst composition according to the present invention is preferably carried out at a temperature between 20 and 120 °C, more preferably between 40 and 100 °C.

In the preparation of the modified zeolite of the Y-type the ultra-stable zeolite Y or the very ultra-stable zeolite Y is preferably contacted with the solution of an alkaline compound during a time between 15 minutes and 4 hours. Preference is given to a treatment during a time between 30 minutes and 2 hours.

The preparation of the modified zeolite of the Y-type can suitably be carried out at both ambient pressure and elevated pressure.

Preferably, the modified zeolite of the Y-type has a unit cell size below 2.435 nm, more preferably in the range from 24.28 Å to 24.33 Å. Preferably, the modified zeolite of the Y-type has a SiO₂/Al₂O₃ molar ratio of from 4 to 25, more preferably from 8 to 15.

The modified zeolites of the Y-type is prepared from ultra-stable Y or very ultra-stable Y. In the context of the present application ultra-stable Y is defined as a zeolite Y having an alkali metal oxide content below 3.5% by weight and a unit cell size below 24.60 Å, whereas very ultra-stable Y is defined as a zeolite Y having an alkali metal oxide content below 0.5% by weight and a unit cell size below 24.45 Å. Preferably the modified zeolite of the Y-type is prepared from a zeolite Y having a unit cell size below 24.35 Å.

The modified zeolite of the Y-type which is to be applied as catalyst component is advantageously subsequently subjected to an acidic treatment resulting in a modified zeolite of the Y-type having a (further) reduced unit cell size.

After the alkaline treatment and/or acidic treatment the modified zeolite of the Y-type obtained can be subjected to a drying step.

Drying is normally achieved by heating of the material concerned at a temperature ranging from ambient to about 350 °C. The drying procedure may be carried out in air or by using an inert gas such as nitrogen.

The dried material thus obtained can suitably subsequently be subjected to a calcination treatment.

The calcination is normally performed at a temperature between 350 and 800 °C. Preference is given to a calcination temperature between 500 and 750 °C.

The binder material to be applied suitably comprises an inorganic oxide or a mixture of inorganic oxides.

The binder(s) present in the catalyst composition suitably comprise silica, alumina, silica-alumina, clays, zirconia, silica-zirconia and silica-boria. Preference is given to alumina or armorphous silica-alumina.

The amount of binder(s) in the catalyst composition can vary within a wide range.

The catalyst composition according to the present invention suitably comprises 1-90% by weight of modified zeolite of the Y-type and 10-99% by weight of binder.

Suitably, the catalyst composition comprises less than 25% by weight of the modified Y zeolite, more than 25% by weight of binder and in addition at least 30% by weight of a dispersion of silica-alumina in an alumina matrix.

Suitably, the composition of matter comprises at least 30% by weight of binder.

Preference is given to compositions of matter comprising less than 15% by weight of the modified Y zeolite.

Preferably, the composition of matter has a binder/modified Y zeolite weight ratio in the range of 2-40.

Suitably, the composition of matter comprises 40-70% by weight of the dispersion.

Suitably, the alumina matrix comprises a transitional alumina matrix, preferably a gamma-alumina matrix.

The present invention further relates to a catalyst composition comprising besides a modified zeolite of the Y-type and a binder at least one hydrogenation component of a Group VI metal and/or at least one hydrogenation component of a Group VIII metal.

Suitably, the catalyst composition according to the present invention comprises one or more components of nickel and/or cobalt and one or more components of molybdenum and/or tungsten or one or more components of platinum and/or palladium.

The amount(s) of hydrogenation component(s) in the catalyst composition suitably ranges between 0.05 and 10% by weight of Group VIII metal component(s) and between 2 and 40% by weight of Group VI metal component(s), calculated as metal(s) per 100 parts by weight of total catalyst. The hydrogenation components in the catalyst composition may be in the oxidic and/or sulphidic form. If a combination of at least a Group VI and a Group VIII metal component is present as (mixed) oxides, it will normally be subjected to a sulphiding treatment prior to proper use in hydrocracking.

Feedstocks which can suitably be subjected to a hydroconversion process using a catalyst according to the present invention comprise gas oils, deasphalted oils, coker gas oils and other thermally cracked gas oils and syncrudes, optionally originating from tar sands, shale oils, residue upgrading processes or biomass. Combinations of various feedstocks can be applied.

It may be desirable to subject part or all of the feedstock to one or more (hydro)treatment steps prior to its use in the hydroconversion process. It is often convenient to subject the feedstock to a (partial) hydrotreatment. When rather heavy feedstocks are to be processed it may be advantageous to subject such feedstocks to a (hydro)demetallization treatment.

Suitable process conditions for the hydroconversion process comprise temperatures between 250 and 500 °C, partial hydrogen pressures of up to 300 bar and space velocities between 0.1 and 10 kg feed per litre catalyst per hour (kg/l/hr). Gas/feed ratios between 100 and 5000 Nl/kg can suitably be applied. Preferably, the hydroconversion process is carried out at a temperature between 300 and 450 °C, a partial hydrogen pressure between 25 and 200 bar and a space velocity between 0.2 and 5 kg feed per litre catalyst per hour. Preferably, gas/feed ratios are applied between 250 and 2000 Nl/kg.

The present invention further relates to the process for the preparation of the modified zeolite of the Y-type as described hereinbefore.

Hence, the present invention also relates to a process for the preparation of a modified zeolite of the Y-type which comprises subjecting an ultra-stable zeolite Y or a very ultra-stable zeolite Y to a treatment with a solution of an alkaline compound having a pH between 8 and 13.

In this way a modified zeolite of the Y-type can be obtained having a high hydrophilicity and a low unit cell size, since the hydrophilicity can be increased whereas the unit cell size can be remained constant or decreased. The increase in unit cell size is known to accompany an increased framework Al content, and thus a reduced SiO₂/Al₂O₃ molar ratio of the zeolite framework.

In this context reference is made, for instance, to J. Chem. Soc., Chem. Commum., 1986, p. 582-584, wherein a method has been disclosed for modifying the siting of Al and Si in an ultra-stable zeolite Y. The ultra-stable zeolite Y was treated with an aqueous solution of KOH having a pH of 13.4 resulting in a considerable increase of the amount of frame work aluminium of the zeolite, and consequently an increase in the unit cell size of the zeolite.

Suitably, in the process according to the present invention use is made of a solution of an alkaline compound having a pH between 9 and 12.

Suitably, the alkaline compounds to be used in the present invention comprise metal hydroxides, nitrogen-containing alkaline compounds and organic alkaline compounds. The nitrogen-containing alkaline compounds include for instance ammonium hydroxide, monoethanolamine, tetrapropylammonium hydroxide and triethanolamine. Preferred nitrogen-containing alkaline compounds comprise ammonium hydroxide and alkanolamines, such amino-compounds having from 1 to 3 alkanol moieties each moiety having from 1 to 6 carbon atoms. More preferred are ethanolamines, such as mono-, di- or triethanolamine, in particular monoethanolamine. The metal hydroxide comprises for instance sodium hydroxide and potassium hydroxide. The organic alkaline compound comprises for instance Na-phenolate.

Preferably, use is made of an aqueous solution of the alkaline compound.

Preferably, the modified zeolite of the Y-type obtained has a reduced unit cell size (as determined by X-ray diffraction) and an increased hydrophilicity. When applying as starting material a zeolite Y having a unit cell size below 24.35 Å, suitably a reduction of unit cell size is obtained of at most 0.1 Å, preferably of at most 0.05 Å, whereas the hydrophilicity is increased.

The process according to the present invention can suitably be carried out at a temperature between 20 and 120 °C, preferably between 40 and 100 °C.

In the process according to the present invention the zeolite of the Y-type can suitably be contacted with the solution of an alkaline compound during a time between 15 minutes and 4 hours. Preference is given to a treatment during a time between 30 minutes and 2 hours.

The present process can suitably be carried out at both ambient pressure and elevated pressure.

The modified zeolites of the Y-type obtained in the process according to the present invention can advantageously subsequently be subjected to an acidic treatment resulting in zeolites having a (further) reduced unit cell size.

After the alkaline treatment and/or acidic treatment the materials thus treated can be subjected to a drying step.

Drying is normally achieved by heating of the material concerned at a temperature ranging from ambient to about 350 °C. The drying procedure may be carried out in air or by using an inert gas such as nitrogen.

The dried material thus obtained can suitably be subjected to a calcination treatment.

The calcination is normally performed at a temperature between 350 and 800 °C. Preference is given to a calcination temperature between 500 and 750 °C.

The process in accordance with the present invention will now be illustrated by means of the following Example.

### Example

### Experiment 1

A very ultra-stable zeolite Y having a SiO₂/Al₂O₃ molar ratio of 10.8, a unit cell size of 2.433 nm and a RBT value of 0.26 was subjected to a treatment with a solution of monoethanolamine having a pH of 10. The treatment was carried out for 1 hour at reflux conditions. The modified zeolite of the Y-type recovered had a unit cell size of 2.427 nm and a RBT value of 0.57. The Residual Butanol Test was carried out as described hereinbefore.

### Experiment 2

The procedure as described in experiment 1 was repeated using a solution of ammonium hydroxide having a pH of 10. The unit cell size of the material obtained amounted to 2.430 nm, whilst the RBT value amounted to 0.37.

### Experiment 3

The procedure as described in experiment 1 was repeated, using a solution of triethanolamine having a pH of 10. The unit cell size of the material obtained amounted to 2.432, whilst the RBT value amounted to 0.39.

### Experiment 4

The procedure as described in experiment 1 was repeated, using a solution of tetrapropylammonium hydroxide having a pH of 10. The unit cell size of the material obtained amounted to 2.431 nm, whilst the RBT value amounted to 0.29.

## Claims (Claims for the following Contracting State(s): AT, BE, CH, LI, DE, DK, FR, GB, GR, IT, LU, NL, PT, SE)

1. Catalyst composition comprising a modified zeolite of the Y-type and a binder, which modified zeolite is obtainable by subjecting an ultra-stable zeolite Y or a very ultra-stable zeolite Y to a treatment with a solution of an alkaline compound having a pH between 8 and 13.

2. Catalyst composition according to claim 1, wherein the modified zeolite of the Y-type has been prepared by subjecting a zeolite of the Y-type to a treatment with a solution of an alkaline compound having a pH between 9 and 12.

3. Catalyst composition according to claim 1 or 2, wherein the alkaline compound comprises a metal hydroxide, a nitrogen-containing alkaline compound or an organic alkaline compound.

4. Catalyst composition according to any one of claims 1-3, wherein the treatment with the solution of an alkaline compound has been carried out at a temperature between 20 and 120 °C.

5. Catalyst composition according to any one of claims 1-4, wherein the zeolite of the Y-type has been contacted with the solution of an alkaline compound during a time between 15 minutes and 4 hours.

6. Catalyst composition according to any one of claims 1-5, wherein the binder comprises an inorganic oxide or a mixture of inorganic oxides.

7. Catalyst composition according to any one of claims 1-6, wherein the modified zeolite of the Y-type has a unit cell size below 2.435 nm.

8. Catalyst composition according to any one of claims 1-7, wherein the modified zeolite of the Y-type has a SiO₂/Al₂O₃ molar ratio of from 4 to 25.

9. Catalyst composition according to any one of claims 1-8 which comprises in addition at least one hydrogenation component of a Group VI metal and/or at least one hydrogenation component of a Group VIII metal.

10. Hydroconversion process wherein use is made of a catalyst composition according to any one of claims 1-9.

11. Process for the preparation of a modified zeolite of the Y-type which comprises subjecting an ultra-stable zeolite Y or a very ultra-stable zeolite Y to a treatment with a solution of an alkaline compound having a pH between 8 and 13.

12. Process according to claim 11, wherein the solution has a pH between 9 and 12.

13. Process according to claim 11 or 12, wherein the alkaline compound is a metal hydroxide, a nitrogen-containing alkaline compound or an organic alkaline compound.

14. Process according to any one of claims 11-13, wherein the treatment with the solution of an alkaline compound has been carried out at a temperature between 20 and 120 °C.

15. Process according to any one of claims 11-14, wherein the zeolite of the Y-type has been contacted with the solution of an alkaline compound during a time between 15 minutes and 4 hours.

## Claims (Claims for the following Contracting State(s): ES)

1. A process for the preparation of a catalyst composition which comprises mixing a modified zeolite of the Y-type and a binder, which modified zeolite is obtainable by subjecting an ultra-stable zeolite Y or a very ultra-stable zeolite Y to a treatment with a solution of an alkaline compound having a pH between 8 and 13.

2. A process according to claim 1, wherein the modified zeolite of the Y-type has been prepared by subjecting a zeolite of the Y-type to a treatment with a solution of an alkaline compound having a pH between 9 and 12.

3. A process according to claim 1 or 2, wherein the alkaline compound comprises a metal hydroxide, a nitrogen-containing alkaline compound or an organic alkaline compound.

4. A process according to any one of claims 1-3, wherein the treatment with the solution of an alkaline compound has been carried out at a temperature between 20 and 120 °C.

5. A process according to any one of claims 1-4, wherein the zeolite of the Y-type has been contacted with the solution of an alkaline compound during a time between 15 minutes and 4 hours.

6. A process according to any one of claims 1-5, wherein the binder comprises an inorganic oxide or a mixture of inorganic oxides.

7. A process according to any one of claims 1-6, wherein the modified zeolite of the Y-type has a unit cell size below 2.435 nm.

8. A process according to any one of claims 1-7, wherein the modified zeolite of the Y-type has a SiO₂/Al₂O₃ molar ratio of from 4 to 25.

9. A process according to any one of claims 1-8 which comprises in addition at least one hydrogenation component of a Group VI metal and/or at least one hydrogenation component of a Group VIII metal.

10. Hydroconversion process wherein use is made of a catalyst composition as prepared in any one of claims 1-9.

11. Process for the preparation of a modified zeolite of the Y-type which comprises subjecting an ultra-stable zeolite Y or a very ultra-stable zeolite Y to a treatment with a solution of an alkaline compound having a pH between 8 and 13.

12. Process according to claim 11, wherein the solution has a pH between 9 and 12.

13. Process according to claim 11 or 12, wherein the alkaline compound is a metal hydroxide, a nitrogen-containing alkaline compound or an organic alkaline compound.

14. Process according to any one of claims 11-13, wherein the treatment with the solution of an alkaline compound has been carried out at a temperature between 20 and 120 °C.

15. Process according to any one of claims 11-14, wherein the zeolite of the Y-type has been contacted with the solution of an alkaline compound during a time between 15 minutes and 4 hours.

## Patentansprüche (Patentansprüche für folgende(n) Vertragsstaat(en): AT, BE, CH, LI, DE, DK, FR, GB, GR, IT, LU, NL, PT, SE)

1. Katalysatorzusammensetzung mit einem modifizierten Zeolith vom Y-Typ und einem Bindemittel, wobei der modifizierte Zeolith durch Behandlung eines hochstabilen Y-Zeoliths oder eines höchststabilen Y-Zeoliths mit einer Lösung einer alkalischen Verbindung mit einem pH-Wert zwischen 8 und 13 erhalten werden kann.

2. Katalysatorzusammensetzung nach Anspruch 1, wobei der modifizierte Zeolith vom Y-Typ durch Behandlung eines Zeoliths vom Y-Typ mit einer Lösung einer alkalischen Verbindung mit einem pH-Wert zwischen 9 und 12 hergestellt worden ist.

3. Katalysatorzusammensetzung nach Anspruch 1 oder 2, wobei die alkalische Verbindung ein Metallhydroxid, eine stickstoffhaltige alkalische Verbindung oder eine organische alkalische Verbindung umfaßt.

4. Katalysatorzusammensetzung nach einem der Ansprüche 1-3, wobei die Behandlung mit der Lösung einer alkalischen Verbindung bei einer Temperatur zwischen 20 und 120°C durchgeführt worden ist.

5. Katalysatorzusammensetzung nach einem der Ansprüche 1-4, wobei der Zeolith vom Y-Typ mit der Lösung einer alkalischen Verbindung 15 Minuten bis 4 Stunden lang in Berührung gebracht worden ist.

6. Katalysatorzusammensetzung nach einem der Ansprüche 1-5, wobei das Bindemittel ein anorganisches Oxid oder eine Mischung aus anorganischen Oxiden umfaßt.

7. Katalysatorzusammensetzung nach einem der Ansprüche 1-6, wobei der modifizierte Zeolith vom Y-Typ eine Gitterkonstante unter 2,435 nm aufweist.

8. Katalysatorzusammensetzung nach einem der Ansprüche 1-7, wobei der modifizierte Zeolith vom Y-Typ ein Molverhältnis SiO₂/Al₂O₃ von 4 bis 25 aufweist.

9. Katalysatorzusammensetzung nach einem der Ansprüche 1-8, die zusätzlich mindestens eine Hydrierungskomponente eines Metalls der Gruppe VI und/oder mindestens eine Hydrierungskomponente eines Metalls der Gruppe VIII umfaßt.

10. Verfahren zur hydrierenden Umwandlung, wobei eine Katalysatorzusammensetzung nach einem der Ansprüche 1-9 verwendet wird.

11. Verfahren zur Herstellung eines modifizierten Zeoliths vom Y-Typ, bei dem ein hochstabiler Y-Zeolith oder ein höchststabiler Y-Zeolith mit einer Lösung einer alkalischen Verbindung mit einem pH-Wert zwischen 8 und 13 behandelt wird.

12. Verfahren nach Anspruch 11, wobei die Lösung einen pH-Wert zwischen 9 und 12 aufweist.

13. Verfahren nach Anspruch 11 oder 12, wobei es sich bei der alkalischen Verbindung um ein Metallhydroxid, eine stickstoffhaltige alkalische Verbindung oder eine organische alkalische Verbindung handelt.

14. Verfahren nach einem der Ansprüche 11-13, wobei die Behandlung mit der Lösung einer alkalischen Verbindung bei einer Temperatur zwischen 20 und 120°C erfolgt ist.

15. Verfahren nach einem der Ansprüche 11-14, bei dem der Zeolith vom Y-Typ mit der Lösung einer alkalischen Verbindung 15 Minuten bis 4 Stunden lang in Berührung gebracht worden ist.

## Patentansprüche (Patentansprüche für folgende(n) Vertragsstaat(en): ES)

1. Verfahren zur Herstellung einer Katalysatorzusammensetzung, bei dem ein modifizierter Zeolith vom Y-Typ und ein Bindemittel vermischt werden, wobei der modifizierte Zeolith durch Behandlung eines hochstabilen Y-Zeoliths oder eines höchststabilen Y-Zeoliths mit einer Lösung einer alkalischen Verbindung mit einem pH-Wert zwischen 8 und 13 erhalten werden kann.

2. Verfahren nach Anspruch 1, wobei der modifizierte Zeolith vom Y-Typ durch Behandlung eines Zeoliths vom Y-Typ mit einer Lösung einer alkalischen Verbindung mit einem pH-Wert zwischen 9 und 12 hergestellt worden ist.

3. Verfahren nach Anspruch 1 oder 2, wobei die alkalische Verbindung ein Metallhydroxid, eine stickstoffhaltige alkalische Verbindung oder eine organische alkalische Verbindung umfaßt.

4. Verfahren nach einem der Ansprüche 1-3, wobei die Behandlung mit der Lösung einer alkalischen Verbindung bei einer Temperatur zwischen 20 und 120°C durchgeführt worden ist.

5. Verfahren nach einem der Ansprüche 1-4, wobei der Zeolith vom Y-Typ mit der Lösung einer alkalischen Verbindung 15 Minuten bis 4 Stunden lang in Berührung gebracht worden ist.

6. Verfahren nach einem der Ansprüche 1-5, wobei das Bindemittel ein anorganisches Oxid oder eine Mischung aus anorganischen Oxiden umfaßt.

7. Verfahren nach einem der Ansprüche 1-6, wobei der modifizierte Zeolith vom Y-Typ eine Gitterkonstante unter 2,435 nm aufweist.

8. Verfahren nach einem der Ansprüche 1-7, wobei der modifizierte Zeolith vom Y-Typ ein Molverhältnis SiO₂/Al₂O₃ von 4 bis 25 aufweist.

9. Verfahren nach einem der Ansprüche 1-8, das zusätzlich mindestens eine Hydrierungskomponente eines Metalls der Gruppe VI und/oder mindestens eine Hydrierungskomponente eines Metalls der Gruppe VIII umfaßt.

10. Verfahren zur hydrierenden Umwandlung, wobei eineKatalysatorzusammensetzung nach einem der Ansprüche 1-9 verwendet wird.

11. Verfahren zur Herstellung eines modifizierten Zeoliths vom Y-Typ, bei dem ein hochstabiler Y-Zeolith oder ein höchststabiler Y-Zeolith mit einer Lösung einer alkalischen Verbindung mit einem pH-Wert zwischen 8 und 13 behandelt wird.

12. Verfahren nach Anspruch 11, wobei die Lösung einen pH-Wert zwischen 9 und 12 aufweist.

13. Verfahren nach Anspruch 11 oder 12, wobei es sich bei der alkalischen Verbindung um ein Metallhydroxid, eine stickstoffhaltige alkalische Verbindung oder eine organische alkalische Verbindung handelt.

14. Verfahren nach einem der Ansprüche 11-13, wobei die Behandlung mit der Lösung einer alkalischen Verbindung bei einer Temperatur zwischen 20 und 120°C erfolgt ist.

15. Verfahren nach einem der Ansprüche 11-14, bei dem der Zeolith vom Y-Typ mit der Lösung einer alkalischen Verbindung 15 Minuten bis 4 Stunden lang in Berührung gebracht worden ist.

## Revendications (Revendications pour l'(les) Etat(s) contractant(s) suivant(s): AT, BE, CH, LI, DE, DK, FR, GB, GR, IT, LU, NL, PT, SE)

1. Composition catalytique comprenant une zéolite du type Y modifiée et un liant, la zéolite modifiée pouvant être obtenue en soumettant une zéolite Y ultra-stable ou une zéolite Y très ultra-stable à un traitement avec une solution d'un composé alcalin ayant un pH compris entre 8 et 13.

2. Composition catalytique selon la revendication 1, dans laquelle la zéolite du type Y modifiée a été préparée par exposition d'une zéolite du type Y à un traitement avec une solution d'un composé alcalin ayant un pH compris entre 9 et 12.

3. Composition catalytique selon la revendication 1 ou 2, dans laquelle le composé alcalin comprend un hydroxyde de métal, un composé alcalin contenant de l'azote ou un composé alcalin organique.

4. Composition catalytique selon l'une quelconque des revendications 1-3, dans laquelle le traitement avec la solution d'un composé alcalin a été effectué à une température comprise entre 20 et 10°C.

5. Composition catalytique selon l'une quelconque des revendications 1-4, dans laquelle la zéolite du type Y a été mise en contact avec la solution d'un composé alcalin durant un laps de temps compris entre 15 minutes et 4 heures.

6. Composition catalytique selon l'une quelconque des revendications 1-5, dans laquelle le liant comprend un oxyde inorganique ou un mélange d'oxydes inorganiques.

7. Composition catalytique selon l'une quelconque des revendications 1-6, dans laquelle la zéolite du type Y modifiée a une dimension des mailles unitaires de moins de 2,435 nm.

8. Composition catalytique selon l'une quelconque des revendications 1-7, dans laquelle la zéolite du type Y modifiée a un rapport molaire SiO₂/Al₂O₃ compris entre 4 et 25.

9. Composition catalytique selon l'une quelconque des revendications 1-8, qui comprend en outre au moins un constituant d'hydrogénation dérivé d'un métal du groupe VI et/ou au moins un constituant d'hydrogénation dérivé d'un metal du groupe VIII.

10. Procédé d'hydroconversion dans lequel on utilise une composition catalytique selon l'une quelcoque des revendications 1-9.

11. Procédé pour la préparation d'une zéolite du type Y modifiée, qui comprend l'exposition d'une zéolite Y ultra-stable ou d'une zéolite Y très ultra-stable à un traitement avec une solution d'un composé alcalin ayant un pH compris entre 8 et 13.

12. Procédé selon la revendication 11, dans lequel la solution a un pH compris entre 9 et 12.

13. Procédé selon la revendication 11 ou 12, dans lequel le composé alcalin est un hydroxyde de métal, un composé alcalin contenant de l'azote ou un composé alcalin organique.

14. Procédé selon l'une quelconque des revendications 11-13, dans lequel le traitement avec la solution d'un composé alcalin a été effectué à une température comprise entre 20 et 120°C.

15. Procédé selon l'une quelconque des revendications 11-14, dans lequel la zéolite du type Y a été mise en contact avec la solution d'un composé alcalin durant un laps de temps compris entre 15 minutes et 4 heures.

## Revendications (Revendications pour l'(les) Etat(s) contractant(s) suivant(s): ES)

1. Un procédé pour la préparation d'une composition catalytique, qui comprend l'opération de mélange d'une zéolite du type Y modifiée et d'un liant, la zéolite modifiée pouvant être obtenue en soumettant une zéolite Y ultra-stable ou une zéolite Y très ultra-stable à un traitement avec une solution d'un composé alcalin ayant un pH compris entre 8 et 13.

2. Un procédé selon la revendication 1, dans lequel la zéolite du type Y modifiée a été préparée en soumettant une zéolite du type Y à un traitement avec une solution d'un composé alcalin ayant un pH compris entre 9 et 12.

3. Un procédé selon la revendication 1 ou 2, dans lequel le composé alcalin comprend un hydroxyde de métal, un composé alcalin contenant de l'azote ou un composé alcalin organique.

4. Un procédé selon l'une quelconque des revendications 1-3, dans lequel le traitement avec la solution d'un composé alcalin a été effectué à une température comprise entre 20 et 120°C.

5. Un procédé selon l'une quelconque des revendications 1-4, dans lequel la zéolite du type Y a été mise en contact avec la solution d'un composé alcalin durant un laps de temps compris entre 15 minutes et 4 heures.

6. Un procédé selon l'une quelconque des revendications 1-5, dans lequel le liant comprend un oxyde inorganique ou un mélange d'oxydes inorganiques.

7. Un procédé selon l'une quelconque des revendications 1-6, dans lequel la zéolite du type Y modifiée a une dimension des cellules unitaires inférieure à 2,435 nm.

8. Un procédé selon l'une quelconque des revendications 1-7, dans lequel la zéolite du type Y modifiée a un rapport molaire SiO₂/Al₂O₃ compris entre 4 et 25.

9. Un procédé selon l'une quelconque des revendications 1-8, qui comprend en outre au moins un constituant d'hydrogénation dérivé d'un métal du groupe VI et/ou au moins un constituant d'hydrogénation dérivé d'un métal du groupe VIII.

10. Procédé d'hydroconversion dans lequel on utilise une composition catalytique telle que préparée dans l'une quelconque des revendications 1-9.

11. Procédé pour la préparation d'une zéolite du type Y modifiée, qui comprend l'exposition d'une zéolite Y ultra-stable ou d'une zéolite Y très ultra-stable à un traitement avec une solution d'un composé alcalin ayant un pH compris entre 8 et 13.

12. Procédé selon la revendication 11, dans lequel la solution a un pH compris entre 9 et 12.

13. Procédé selon la revendication 11 ou 12, dans lequel le composé alcalin est un hydroxyde de métal, un composé alcalin contenant de l'azote ou un composé alcalin organique.

14. Procédé selon l'une quelconque des revendications 11-13, dans lequel le traitement avec la solution d'un composé alcalin a été effectué à une température comprise entre 20 et 120°C.

15. Procédé selon l'une quelconque des revendications 11-14, dans lequel la zéolite du type Y a été mise en contact avec la solution d'un composé alcalin durant un laps de temps compris entre 15 minutes et 4 heures.
